# DEMANDE DE BREVET EUROPEEN

(11) **EP 2 065 859 A2**
(43) Date de publication de la demande: **03.06.2009**
(21) Numéro de dépôt: 08291030.8
(22) Date de dépôt: 05.11.2008
(51) Int. Cl.: G07F 7/10

(54) **Carte à microprocesseur, téléphone comprenant une telle carte et procédé de traitement dans une telle carte**

(30) Priorité: 13.11.2007 FR 0759008
(71) Demandeur: Oberthur Technologies, 75017 Paris (FR)
(72) Inventeur: Chamley, Olivier, 33850 Leognan (FR); Stranges, Lorenzo, 92200 Neuilly sur Seine (FR)
(74) Mandataire: Bonnans, Arnaud

(57) **Abrégé**

La présente invention concerne une carte à microprocesseur (1) comportant :
- un premier et un deuxième microcircuits (100, 200) mémorisant respectivement une première et une deuxième applications (120, 220) ;
- des moyens de communication (14) avec l'extérieur de la carte (1), reliés audit premier microcircuit (100) ;
- ladite première application (120) étant apte à transmettre (708), à ladite deuxième application (220), une commande reçue par les moyens de communication (14) ;
- ladite première application (120) étant apte à recevoir une réponse à ladite commande transmise à la deuxième application (220) et à agréger (718) ladite réponse avec au moins une donnée stockée en mémoire du premier microcircuit (200) de sorte à former une réponse globale à ladite commande reçue de l'extérieur.

## Description

La présente invention concerne une carte à microprocesseur. Elle s'applique, plus particulièrement, aux cartes à microprocesseur conformes à la norme ISO 7816 et aux cartes à microprocesseur conformes à la norme MMC (acronyme de « MultiMedia Card » pour carte multimédia). L'invention concerne également un téléphone mobile comportant une telle carte et un procédé de traitement sur une telle carte.

Certaines cartes à microprocesseur peuvent comporter plusieurs applications, mémorisées en mémoire non volatile, par exemple en mémoire ROM ou EEPROM, c'est-à-dire que le ou les microprocesseurs internes disposent, en mémoire, des codes exécutables (ou interprétables) de plusieurs applications informatiques et sont adaptés à les exécuter pour assurer une tâche ou une fonction particulière.

On peut prévoir par exemple qu'une première application par défaut est une application de téléphonie mobile, s'il s'agit d'une carte de téléphonie mobile, destinée à un téléphone mobile, et qu'une deuxième application est une application bancaire utilisée de façon occasionnelle par exemple pour effectuer un paiement à l'aide du téléphone. Cela peut notamment permettre que la carte à puce soit conforme à la fois, par exemple, à une norme de téléphonie mobile (par exemple, une norme GSM [acronyme de *"Global System for Mobile Communications*"] ou ETSI [acronyme de *"European Telecommunications Standards Institute*"]) et à la fois à une norme bancaire (par exemple EMV [acronyme de "*Europay Mastercard Visa*"]). Un exemple de première application est un serveur web de carte à puce (SCWS acronyme de "*Smart Card Web Serve*" selon la terminologie anglo-saxonne) adapté à communiquer avec un navigateur du téléphone mobile et/ou avec le réseau Internet via le réseau de téléphonie mobile, par exemple au travers du protocole WAP (acronyme de "*Wireless Application Protocol*").

Dans certains cas, les cartes à microprocesseur comportent, à la fois, une application à forte exigence de sécurité et une application à exigence de sécurité modérée.

Typiquement, les applications à haute exigence de sécurité sont, par exemple, les applications de paiement ou d'identification du porteur (passeport, carte d'identité). Les clients exigent, pour ces applications, un niveau de sécurité élevé qui nécessite des évaluations particulièrement longues et coûteuses, par exemple conformément aux critères communs, effectuées par un organisme indépendant certifié. Certaines évaluations peuvent durer plus d'un an et coûter plusieurs dizaines de milliers d'euros pour un modèle de carte à microprocesseur. Généralement, une évaluation, éventuellement allégée, doit être à nouveau réalisée lorsque l'application évolue.

Les applications à exigence de sécurité modérée sont, par exemple, les applications de téléphonie mobile (par exemple d'identification de souscripteur à un réseau de téléphonie mobile) ou de transports (par exemple, accès un réseau de transport en commun). Ces applications ne nécessitent généralement pas une certification ou nécessitent une certification beaucoup moins longue et coûteuse que les précédentes.

Les cartes à microprocesseur actuelles requièrent que les applications à exigence de sécurité modérée soient évaluées et certifiées selon les mêmes critères que les applications à exigence de sécurité élevée, ce qui occasionne des coûts et d'importants délais.

Il existe donc un besoin d'assurer une sécurité élevée pour les applications concernées en évitant de mener des certifications inutiles.

Dans ce dessein, l'invention vise notamment une carte à microprocesseur comportant :
- un premier et un deuxième microcircuits mémorisant respectivement une première et une deuxième applications ;
- des moyens de communication avec l'extérieur de la carte, reliés audit premier microcircuit ;
- ladite première application étant apte à transmettre, à ladite deuxième application, une commande reçue par les moyens de communication ;
- ladite première application étant apte à recevoir une réponse à ladite commande transmise à la deuxième application et à agréger ladite réponse avec au moins une donnée stockée en mémoire du premier microcircuit de sorte à former une réponse globale à ladite commande reçue de l'extérieur.

Ainsi, la première application constitue un relais de sécurité pour la deuxième application en contrôlant la commande arrivant, par exemple par une conversion, et en combinant la réponse fournie avec des données complémentaires. Dans cette configuration, la première application est prépondérante en ce qu'elle reçoit et traite toutes les commandes reçues pour éventuellement les retransmettre à une autre application, le cas échéant.

En outre, l'utilisation de deux microcircuits distincts rend inaccessible, depuis l'interface de communication, le microcircuit de l'application à niveau de sécurité élevé, ici le deuxième microcircuit. On accroît ainsi la sécurité de transaction de cette deuxième application avec une application ou un équipement externe.

En outre, on rend possible une certification différente entre les deux microcircuits distincts.

En outre, la configuration de l'invention avec un premier microcircuit relais pour le deuxième permet qu'un lecteur de cartes à microprocesseur puisse envoyer des commandes aux deux microprocesseurs sans qu'il ne soit nécessaire de mettre en oeuvre des contacts supplémentaires par rapport au cas où un seul microprocesseur serait commandé.

Dans un mode de réalisation, ladite première application est un serveur web de carte à puce et ladite au moins une donnée comprend des données HTTP, notamment des pages HTML. Ainsi, la carte communique avec l'extérieur au travers principalement du protocole HTTP, notamment avec le réseau Internet via un réseau de téléphonie mobile ou avec un navigateur web pourvu par l'équipement accueillant la carte, typiquement un téléphone mobile.

En particulier, les commandes reçues sont contenues dans des requêtes HTTP.

Selon une autre caractéristique particulière, ladite requête HTTP indique, en association avec ladite commande, un chemin d'accès de la deuxième application. Ainsi, il est possible d'utiliser des première et deuxième applications indépendantes, voire de prévoir plus de deux applications. Deux applications peuvent être indépendantes au sens où leurs codes respectifs ne font pas appel à des commandes ou données spécifiques de l'autre application. Elles présentent alors une exécution indépendante.

II n'est ainsi pas nécessaire de modifier la première application lorsque la deuxième évolue ou est changée.

Dans une variante au serveur web de carte à puce, ladite première application est une application mettant en oeuvre la boîte à outils d'applications SIM ("*SIM Application ToolKit*" selon la terminologie anglo-saxonne).

Dans un mode de réalisation, la première application comporte des moyens de conversion de ladite commande reçue en un format de commande compatible avec ladite deuxième application, par exemple une commande reçue selon le protocole SWP par une interface de communication sans fil à courte portée reliée à la carte en une commande APDU pour la deuxième application.

Dans un mode de réalisation, la première application comporte des moyens pour déterminer si la commande reçue est mise en oeuvre par la première application. Ainsi, elle détermine si la commande reçue la concerne et peut transmettre la commande reçue à la deuxième application le cas échéant (détermination négative). Ces dispositions permettent encore une fois de faire appel à des applications indépendantes.

Notamment, les moyens pour déterminer comprennent des moyens de comparaison de la commande reçue avec une table stockée en mémoire et comprenant une liste des premières commandes mises en oeuvre par la première application.

En variante, les moyens pour déterminer peuvent comprendre au moins une instruction conditionnelle à l'intérieur du code d'exécution de ladite première application de sorte à transmettre ladite commande reçue à la deuxième application lorsque cette commande n'est pas mise en oeuvre par la première application.

Dans un mode de réalisation, la première application est agencée pour transmettre, à l'extérieur de la carte, l'agrégation de la réponse avec l'au moins une donnée, c'est-à-dire la réponse globale, sous forme de réponse HTTP, par exemple comprenant une page HTML. Notamment, la réponse et l'au moins une donnée peuvent être incluses dans le corps d'une page (par exemple HTML) de la réponse HTTP de sorte qu'un navigateur externe exécutant la réponse globale, par exemple un téléphone mobile muni d'un écran d'affichage, affiche la réponse et l'au moins une donnée. D'une façon plus générale, la réponse de la deuxième application et l'au moins une donnée agrégées sont des données d'affichage pour un équipement externe à la carte.

Egalement, la réponse HTTP peut comprendre une instruction de redirection et une adresse cible d'un équipement distant de sorte à commander un navigateur intermédiaire à retransmettre au moins une partie, notamment l'intégralité, de ladite réponse de la deuxième application audit équipement distant.

En variante, la première application est agencée pour transmettre, à l'extérieur de la carte, l'agrégation de la réponse avec l'au moins une donnée (c'est-à-dire la réponse globale) sous forme de commande conforme à la boîte à outils d'applications SIM ("*SIM Application Toolkit*" selon la terminologie anglo-saxonne). Par exemple, la donnée mémorisée par le premier microcircuit peut être un item de menu (qui s'affiche de façon classique sur un téléphone) et la réponse de la deuxième application peut être un ou plusieurs items de sous-menu d'affichage relatifs au service que cette deuxième application met en oeuvre (par exemple gestion d'un porte-monnaie électronique, de droits de sécurité sociale, d'un abonnement).

Dans un mode de réalisation, les moyens de communication sont exclusivement reliés au premier microcircuit. On rend ainsi l'accessibilité du deuxième microcircuit (au niveau de sécurité élevé) depuis l'interface de communication difficile, ce qui garantit un niveau de sécurité supérieur.

En outre, puisque le deuxième microcircuit n'est alors relié qu'au premier circuit, il est possible d'utiliser, à moindre coût, des puces classiques conformes à la norme ISO 7816 pour former ce deuxième microcircuit.

Dans un mode de réalisation, les moyens de communications comprennent des contacts électriques, par exemple affleurants à la carte.

Selon une autre caractéristique particulière, lesdits contacts électriques sont prévus sur une face d'un circuit imprimé de module (par exemple un module de microprocesseur, également appelé puce) et au moins le premier microcircuit est monté sur l'autre face dudit circuit imprimé de module.

Grâce à ces dispositions, on obtient une bonne protection mécanique du ou des microprocesseurs par, d'un côté, le module et de l'autre côté, le substrat ou corps de la carte.

Dans un mode de réalisation, les moyens de communication sont agencés pour se connecter à une interface de communication sans fil d'un lecteur de cartes. Cette interface de communication sans fil peut être pourvue par l'équipement réceptionnant la carte objet de l'invention, par exemple un téléphone mobile.

En particulier, lesdits moyens de communication sont conformes à la norme NFC (acronyme de "Near Field Communication"). Ainsi avec un téléphone mobile muni de tels moyens de communication, on peut réaliser un paiement avec un microprocesseur de paiement existant déjà certifié selon les critères communs. On peut notamment utiliser un unique contact pour recevoir les commandes depuis le deuxième canal.

Egalement, on peut prévoir que lesdits moyens de communication mettent en oeuvre un protocole de communication SWP (acronyme de "Single Wire Protocol") avec la carte, notamment avec le premier circuit ou la première application.

Dans un mode de réalisation, la carte comporte au moins une ligne d'entrée/sortie, de préférence conforme à la norme ISO 7816, qui relie les deux microcircuits et est utilisée pour transmettre ladite commande reçue entre les deux microcircuits.

Notamment, on prévoit une liaison d'horloge qui relie les deux microcircuits de sorte que ledit premier microcircuit fournisse un signal d'horloge au deuxième microcircuit, notamment selon la norme ISO 7816. On rappelle que le signal d'horloge selon la norme ISO 7816 correspond au contact c3 de la norme.

Grâce à ces dispositions, les deux microcircuits peuvent fonctionner avec des horloges différentes, par exemple cadencées selon des fréquences différentes.

Selon des caractéristiques particulières, le premier microcircuit comporte des moyens pour inhiber ledit signal d'horloge fourni au deuxième microcircuit.

Grâce à ces dispositions, dans le cas où le deuxième microcircuit comporte des moyens de mise en veille en l'absence de signal d'horloge, afin notamment d'économiser le courant fourni par le lecteur, ce qui peut être particulièrement critique lorsque le lecteur est dans un objet portable alimenté par une batterie, tel qu'un téléphone mobile, le premier microcircuit peut commander la mise en veille de tout ou partie du deuxième microcircuit.

Dans un mode de réalisation, lesdits deux microcircuits sont montés sur un même circuit imprimé de module (ou puce). Il en résulte une simplification de la certification indépendante des deux microprocesseurs, en vue notamment d'obtenir un microprocesseur hautement sécurisé.

Selon une variante, la carte comprend un corps de carte et un circuit imprimé de module accueilli par le corps, lesdits premier et deuxième microcircuits étant respectivement prévus sur ledit circuit imprimé de module et dans ledit corps, et interconnectés par des pistes conductrices prévues dans le corps de carte.

On choisit notamment que le premier microcircuit met en oeuvre un niveau de sécurité moindre que le deuxième microcircuit.

Grâce à ces dispositions, un lecteur de cartes à microprocesseur ne mettant en oeuvre que le niveau de sécurité du premier microcircuit peut faire fonctionner le deuxième microcircuit. De plus, le deuxième microcircuit peut avoir une sécurité augmentée par le fait que ses commandes lui parviennent uniquement du premier microcircuit.

Notamment, les communications entre les microcircuits et leurs applications respectives peuvent être effectuées à l'aide de commandes APDU (acronyme de "*application protocol data unit*" pour unité de données de protocole applicatif).

Dans un mode de réalisation, ladite réponse de la deuxième application à la commande transmise comprend une donnée d'authentification.

Dans un mode de réalisation, ledit deuxième microcircuit met en oeuvre une application de paiement, notamment conforme à la norme EMV (acronyme de "Europay Mastercard Visa").

On prévoit également que la carte à microprocesseur est conforme à la norme ISO 7816 et/ou à la norme MMC (acronyme de "*MultiMedia Card*")

Selon une caractéristique de l'invention, la carte à microprocesseur est de type carte SIM (acronyme de "*Subscriber ldentity Module*") ou USIM (acronyme de "*Universal Subscriber ldentity Module*").

Selon une autre caractéristique de l'invention, la carte est conforme au format ID-000 selon la norme ISO 7816.

L'invention a également trait à un dispositif comprenant une carte à microprocesseur telle que présentée ci-dessus. En particulier, ce dispositif peut être un terminal, une station hôte ou encore un lecteur; par exemple un téléphone mobile ou un ordinateur personnel.

Dans un mode de réalisation, ledit dispositif comprend une application agencée pour communiquer avec ladite carte à microprocesseur de sorte à transmettre ladite commande (reçue par la carte) et à recevoir ladite réponse et de l'au moins une donnée (réponse globale), par exemple sous forme de réponse HTTP selon le protocole http (l'application est un navigateur web par exemple) ou de commande STK SIM Application ToolKit (l'application est alors compatible STK).

En particulier, ledit dispositif, par exemple un téléphone mobile, comprend des moyens d'affichage, notamment un écran embarqué, pour afficher ladite réponse et l'au moins une donnée contenues dans la réponse globale reçue par ledit navigateur depuis la carte à microprocesseur.

Selon une autre caractéristique particulière, ledit navigateur est agencé pour exécuter une instruction de redirection comprise dans une réponse HTTP de sorte à retransmettre au moins une partie, notamment l'intégralité, de ladite réponse de la deuxième application à un équipement distant.

L'invention vise également un procédé de traitement d'une commande par une carte à microprocesseur comportant un premier et un deuxième microcircuits mémorisant respectivement une première et une deuxième applications, le procédé comprenant les étapes suivantes :
- recevoir, par le premier microcircuit, une commande de l'extérieur de la carte,
- transmettre ladite commande reçue au deuxième microcircuit; et
- agréger une réponse du deuxième circuit à ladite commande avec au moins une donnée stockée en mémoire du premier microcircuit de sorte à former une réponse globale à ladite commande reçue de l'extérieur.

De façon optionnelle, le procédé peut mettre en oeuvre des moyens se rapportant aux caractéristiques de carte à microprocesseur présentées ci-dessus.

Notamment, la transmission au deuxième circuit peut être précédée d'une étape (par exemple effectuée par la première application, qui est dans ce cas prépondérante) consistant à déterminer si la commande reçue de l'extérieur est à destination de ladite première application, ladite transmission étant effectuée en cas de détermination négative.

En particulier, cette détermination peut comprendre la comparaison de la commande reçue de l'extérieur avec une liste des commandes mises en oeuvres par la première application, la liste étant mémorisée par le premier microcircuit.

En variante, cette détermination peut comprendre l'exécution d'instructions conditionnelles contenues dans le code d'exécution de ladite première application.

Dans un mode de réalisation, la commande transmise à la deuxième application comprend une donnée et le procédé comprend une étape d'encryptage, par la deuxième application, de cette donnée à l'aide d'une clé cryptographique mémorisée en mémoire du deuxième microcircuit. Dans cette configuration, l'on prévoit que le deuxième microcircuit comprend des moyens cryptographiques. Ainsi, il est possible de mettre en place des procédures d'authentification sécurisées avec des équipements distants, par exemple une procédure d'authentification par challenge/réponse où la donnée dans la commande est une valeur aléatoire générée et transmise par un serveur distant.

Dans un autre mode de réalisation, la réponse de la deuxième application comprend des données mémorisées en mémoire du deuxième microcircuit. II est ainsi possible, à distance, de récupérer des données stockées de façon sécurisée dans le deuxième microcircuit, par l'utilisation de simples commandes.

Dans un mode de réalisation, l'agrégation comprend l'intégration de données de la réponse de la deuxième application dans des données HTTP mémorisées en mémoire du premier microcircuit. Ainsi, on retourne, en réponse globale, une réponse HTTP, comprenant par exemple des pages HTML, enrichie des données calculées ou déterminées par l'application sécurisée du deuxième microcircuit.

En particulier, lesdites données HTTP comprennent une instruction de redirection et une adresse cible d'un équipement distant de sorte à commander un navigateur intermédiaire à retransmettre au moins une partie, notamment l'intégralité, de la réponse de la deuxième application audit équipement distant.

En variante, l'agrégation combine dans une même commande SIM Application ToolKit STK la réponse du deuxième microcircuit avec une donnée mémorisée par le premier microcircuit.

Dans un mode de réalisation, le procédé comprend une étape d'affichage de données comprises dans la réponse globale. Notamment cet affichage est mené par une application, ici un navigateur ou une application STK ad hoc, recevant ladite réponse globale et relié à un écran de visualisation. Ce navigateur peut notamment équiper un téléphone mobile accueillant ladite carte à microprocesseur.

Dans un mode de réalisation, le procédé comprend, préalablement à ladite étape de transmission, une étape de conversion de ladite commande reçue en un format de commande compatible avec ledit deuxième microprocesseur.

Les avantages, buts et caractéristiques particulières de ce procédé, et de ce téléphone et de ce procédé de mise sur le marché étant similaires à ceux de la carte objet de la présente invention, telle que succinctement exposée ci-dessus, ils ne sont pas rappelés ici.

D'autres avantages, buts et caractéristiques particulières de la présente invention ressortiront de la description qui va suivre, faite, dans un but explicatif et nullement limitatif en regard des dessins annexés, dans lesquels :
- la **figure 1** représente, schématiquement, un premier mode de réalisation de l'invention;
- la **figure 2** représente, schématiquement, un deuxième mode de réalisation de l'invention;
- la **figure 3** représente un schéma électrique applicable à l'un quelconque des modes de réalisation des **figures 1** et **2****;**
- la **figure 4** représente, sous forme de logigramme, des étapes d'un mode de réalisation du procédé selon l'invention;
- la **figure 5** représente, schématiquement, un troisième mode de réalisation de l'invention.
- la **figure 6** représente, schématiquement, un système global dans lequel est mis en oeuvre une carte selon l'invention; et
- la **figure 7** représente, sous forme de logigramme, des étapes d'un exemple de fonctionnement du système de la figure 7.

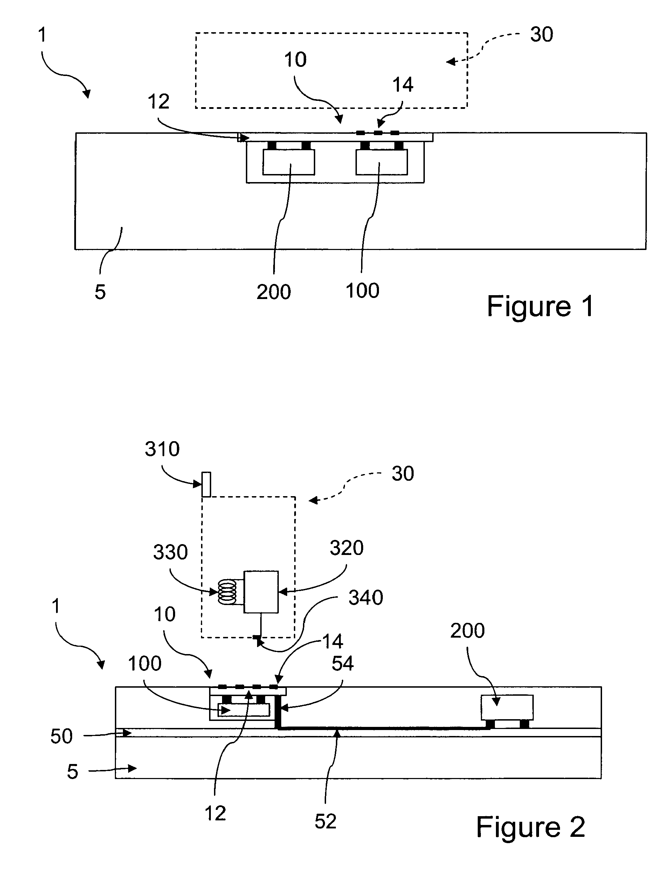

On observe, en **figure 1****,** une carte à puce 1 comportant un substrat plastique 5 formant corps de carte et un module électronique 10 intégré dans le corps de carte.

Le module électronique 10 est formé d'un circuit imprimé 12, de contacts électriques 14 prévus sur la face extérieure du circuit 12 et destinés à être connectés à un lecteur 30, notamment huit contacts affleurants c1 à c8 selon la norme ISO 7816, et un premier microcircuit 100 et un deuxième microcircuit 200 intégrés sur la face interne du circuit 12 de sorte à fournir une protection mécanique à ceux-ci. Les deux microcircuits 100 et 200 sont reliés par l'intermédiaire du circuit imprimé 12, grâce notamment à des pistes conductrices prévus sur ce circuit et des connexions entre ces pistes et les circuit intégré (microcircuit) 100 et 200.

Les contacts électriques 14 sont connectés uniquement au premier microcircuit 100.

Le premier microcircuit 100 comporte un premier microprocesseur 110 associé à une première mémoire conservant des instructions de code exécutable (ou interprétable) d'une première application 120. Le deuxième microcircuit 200 comporte un deuxième microprocesseur 210 associé à une deuxième mémoire conservant des instructions de code exécutable (ou interprétable) d'une deuxième application 220. Par exemple, chacun des microcircuits 100 et 200 est un microcontrôleur comportant un microprocesseur et une mémoire.

Préférentiellement, par le biais des première et deuxième applications, le premier microprocesseur 110 met en oeuvre un niveau de sécurité moindre que le deuxième microprocesseur 210. Par exemple, la première application est une application d'identification de souscripteur à un réseau de téléphonie mobile, appelée SIM (acronyme de « subscriber identification module ») et la deuxième application est une application de paiement bancaire, par exemple conforme à la norme EMV (acronyme de « europay mastercard visa). En variante, le microprocesseur 110 est plus sécurisé que le microprocesseur 210.

On rappelle ici que les niveaux de sécurité sont bien connus de l'homme du métier. En particulier, les microprocesseurs et les applications bancaires sont généralement certifiés selon la méthode de critères communs (correspondant à la norme ISO 15408) à niveau supérieur ou égal à EAL4 (acronyme de « Evaluation Assurance Level 4 » pour niveau d'assurance d'évaluation 4), typiquement à niveau EAL4+. En revanche, les microprocesseurs et les applications de téléphonie mobile ne sont généralement pas certifiés selon les critères communs. Ceci s'explique par le fait que, dans le domaine de la téléphonie mobile, il y a des exigences moins élevées en termes de sécurisation et plus élevées en termes de temps de réponse de la carte, que dans le domaine du paiement.

Le lecteur de carte 30 est un téléphone mobile dans le cas où la première application est une application de téléphonie mobile.

Une première liaison interne, d'entrée/sortie, relie entre eux les deux microprocesseurs 110 et 210 et permet l'échange d'information entre eux. Préférentiellement, les échanges d'information se faisant sur la liaison interne sont conformes à la norme ISO 7816. On peut prévoir, le cas échéant, que le premier microprocesseur 110 connecté aux contacts 14 réalise une conversion de format des données reçues sur les contact en un format ISO 7816 à destination de l'autre microprocesseur 210 (vice et versa dans l'autre sens de communication).

Une deuxième liaison interne, d'horloge, véhicule un signal d'horloge depuis le premier microprocesseur 110 jusqu'au deuxième microprocesseur 210, permettant au premier de cadencer ou d'inhiber le fonctionnement du deuxième. Une troisième liaison interne, de mise à zéro (en anglais « reset »), véhicule un signal de mise à zéro, depuis le premier microprocesseur 110 jusqu'au deuxième microprocesseur 210, permettant au premier de commander la mise à zéro du deuxième.

Dans d'autres modes de réalisation, le premier microprocesseur 110 comporte des moyens de réception conforme à un protocole de communication avec une interface de communication sans fil conforme au protocole de communication « SWP » (« Single Wire Protocol »).

On observe, en **figure 2****,** une carte 1 présentant des éléments communs avec la carte de la **figure 1****.**

Sur la **figure 2****,** le module électronique 10 n'accueille que le premier microcircuit 100.

Le deuxième microcircuit 200 est intégré dans le corps de carte 5 au niveau d'une couche intermédiaire 50 selon un processus de flip-chip.

Les deux microcircuits 100 et 200 sont reliés par une piste conductrice 52 déposée sur la couche 50 lors du processus de fabrication. Un trou métallisé 54 au niveau du premier microcircuit 100 permet de relier électriquement ce dernier à la piste conductrice 52.

On observe, en outre, que le lecteur 30 est constitué d'un téléphone mobile muni d'une antenne 310 et d'un circuit d'interface 320. Le circuit d'interface 320 est de type à très courte portée, par exemple conforme à la norme NFC, et est muni d'une antenne d'interface 330 et est relié à un contact 340 destiné à la communication avec l'un des contacts 14 de la carte 1, par exemple le contact c4.

Un lecteur externe (non représenté) muni d'une interface de communication à très courte portée, par exemple conforme à la norme NFC, communique avec le téléphone mobile 30, par l'intermédiaire de l'interface 320.

On note ici que le contact c4 utilisé pour la communication sans fil est distinct des autres contacts utilisés pour une communication par contact, afin notamment de faciliter la différentiation des canaux d'arrivée de données.

On entend par « très courte portée », une portée inférieure à 1 mètre, préférentiellement inférieure à 50 cm, typiquement inférieure à 20 cm. Il peut s'agir de moyens de communication par exemple conformes à la norme NFC (acronyme de « Near Field Communication », pour communication à champ proche) ou à la norme ISO (acronyme de « International Standardisation Organisation » pour organisation de standardisation internationale) 14443 concernant l'identification radio fréquence (en anglais radiofréquence identification, ou RFID), sans que l'invention ne soit limitée à ces protocoles.

Un avantage de la très courte portée est notamment de permettre à un utilisateur d'engager volontairement ou consciemment des communications sans fil en approchant un dispositif portable d'un lecteur fixe, typiquement à une distance de quelques centimètres. Par exemple, dans le cas d'une carte à microcircuit sans contact de paiement, par exemple de dimension conforme à la norme ISO 7816, une telle portée limite les risques que le compte du porteur d'une carte soit débité, sans que le porteur ait signifié qu'il le souhaite en approchant sa carte à quelques centimètre d'un lecteur approprié, et en engageant ainsi une transaction de paiement entre le lecteur et sa carte.

Dans le cas d'applications à forte exigence de sécurité, par exemple de transaction ou de paiement, le lecteur externe émet des commandes à destination du deuxième microprocesseur 210 et en reçoit les réponses. Ces commandes sont adaptées à être reconnues par le premier microprocesseur 110 comme destinées au deuxième microprocesseur 210, comme exposé ci-dessous.

Un tel téléphone mobile 30 peut également être utilisé avec la carte 1 de la **figure 1****.**

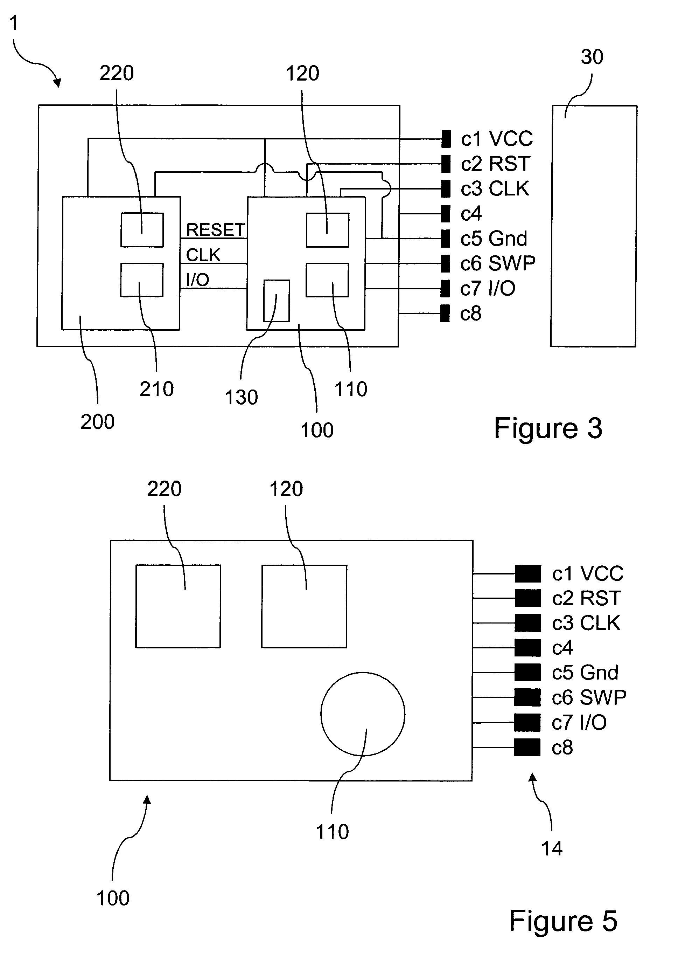

En référence à la **figure 3****,** on a représenté le schéma électrique du module électronique 10 de la **figure 1** ou du module 10 conjointement avec le microcircuit 200 de la **figure 2****.**

On observe ici les huit contacts électriques c1 à c8 dont c1 (Vcc) et c5 (Gnd) fournissent l'alimentation électrique depuis le lecteur 30 aux composants de la carte.

Le premier contact noté « c1 » dans la norme ISO 7816, est relié, par une première liaison, d'une part, au premier microprocesseur 110 et, d'autre part, au deuxième microprocesseur 210. Ce premier contact c1 et cette première liaison véhiculent une tension continue, généralement notée « Vcc », d'alimentation des microprocesseurs 110 et 210 par le lecteur 30. On note ici que la carte 1 est dépourvue d'alimentation autonome. Le contact c1 (combiné avec c5 ci-dessous) permet ainsi l'alimentation de la carte 1 et de ses composants internes.

Le deuxième contact noté « c2 » dans la norme ISO 7816, est relié, par une deuxième liaison, au premier microprocesseur 110. Ce deuxième contact c2 et cette deuxième liaison véhiculent un signal de mise à zéro, généralement notée « RST », de mise à zéro du microprocesseur 110.

Le troisième contact noté « c3 » dans la norme ISO 7816, est relié, par une troisième liaison, au premier microprocesseur 110 et véhicule un signal d'horloge, généralement notée « CLK », pour que le lecteur 30 puisse cadencer le fonctionnement du premier microprocesseur 110.

Le quatrième contact noté « c4 » dans la norme ISO 7816, n'est pas relié à l'un ou l'autre des microprocesseurs 110 et 210.

Le cinquième contact noté « c5 » dans la norme ISO 7816, est relié, par une cinquième liaison, d'une part, au premier microprocesseur 110 et, d'autre part, au deuxième microprocesseur 210. Ce cinquième contact c5 et cette cinquième liaison sont reliés à la terre, généralement notée « GND », pour l'alimentation des microprocesseurs 110 et 210 par le lecteur 30.

Le sixième contact noté « c6 » dans la norme ISO 7816, est relié, par une sixième liaison, au premier microprocesseur 110 et véhicule un signal de donnée, ici noté « SWP », mettant en oeuvre le protocole SWP, ou « single wire protocol », pour protocole à lien unique pour la communication du premier microprocesseur 110 avec le lecteur 30. On note que le lecteur 30 envoie des commandes à la carte 100 en utilisant, par exemple, ce contact c6.

Le septième contact noté « c7 » dans la norme ISO 7816, est relié, par une septième liaison, au premier microprocesseur 110 et véhicule des données, généralement notée «I/O», pour que le lecteur 30 et le premier microprocesseur 110 puisse échanger des données. On note que le lecteur 30 envoie des commandes à la carte 10 en utilisant, par exemple, ce contact c7.

Le huitième contact noté « c8» dans la norme ISO 7816, n'est pas relié à l'un ou l'autre des microprocesseurs 110 et 210.

On observe également les lignes entrée/sortie I/O, d'horloge CLK et de "reset" RESET entre les deux microcircuits 100 et 200. Sur la **figure 2****,** ces lignes sont portées par les pistes conductrices 52.

Dans le microcircuit 100, outre l'application 120 exécutée par le microprocesseur 110, on prévoit une table 130 stockée en mémoire.

Cette table 130 dresse l'ensemble des commandes utilisées par l'application 120, ici commande 1, commande 2 et commande 3. On associe également à chacune de ces commandes l'adresse d'exécution de la commande. Il s'agit, par exemple, d'un pointeur vers l'instruction ou le code binaire à exécuter pour cette commande. Ainsi, lorsque l'on réalise, comme illustré ci-après, une recherche dans cette table, on ne pénalise pas la première application si la commande recherchée est déjà dans la liste, puis l'exécution de cette commande peut être réalisée immédiatement grâce à cette adresse.

Cette table 130 peut notamment être générée lors de la compilation de l'application 120 au stade de sa conception, et fournie à la carte 1 en même temps que cette application.

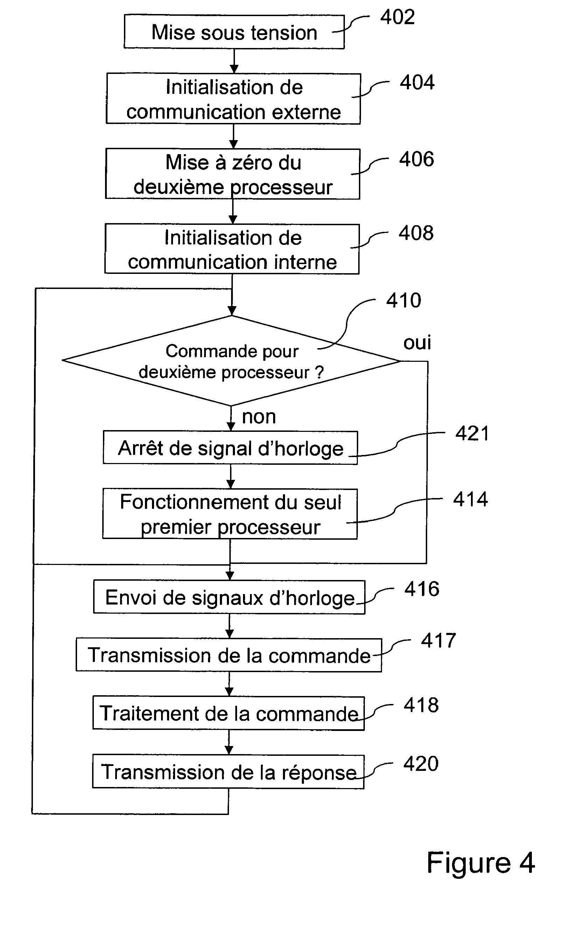

En référence à la **figure 4****,** on décrit maintenant le processus de fonctionnement de la carte 1. A l'étape 402, on met sous tension la carte 1 (et donc les microcircuits 100 et 200) par le lecteur 30. Puis, au cours d'une étape 404, on effectue une initialisation de la communication entre la carte 1 et le lecteur 30 conformément à la norme ISO 7816.

Au cours d'une étape 406, le premier microprocesseur 110 envoie un signal de mise à zéro au deuxième microprocesseur 210 ainsi qu'un signal d'horloge permettant de cadencer le fonctionnement du deuxième microprocesseur 210. Dans le mode de réalisation décrit en **figure 3****,** le premier microprocesseur 110 fournit un signal de mise à zéro de façon conforme à la norme ISO 7816 au deuxième microprocesseur 210, ce signal correspondant au contact c2 de la norme ISO 7816.

Au cours d'une étape 408, les microprocesseurs 110 et 210 initialisent la communication entre eux. Dans le mode de réalisation décrit et représenté, cette communication est effectuée selon le protocole ISO 7816. Dans cette communication, le premier microprocesseur 110 se comporte comme un lecteur du deuxième microprocesseur 210, à l'exception de la fourniture de l'alimentation électrique, qui est assurée directement par les contacts c1 et c5.

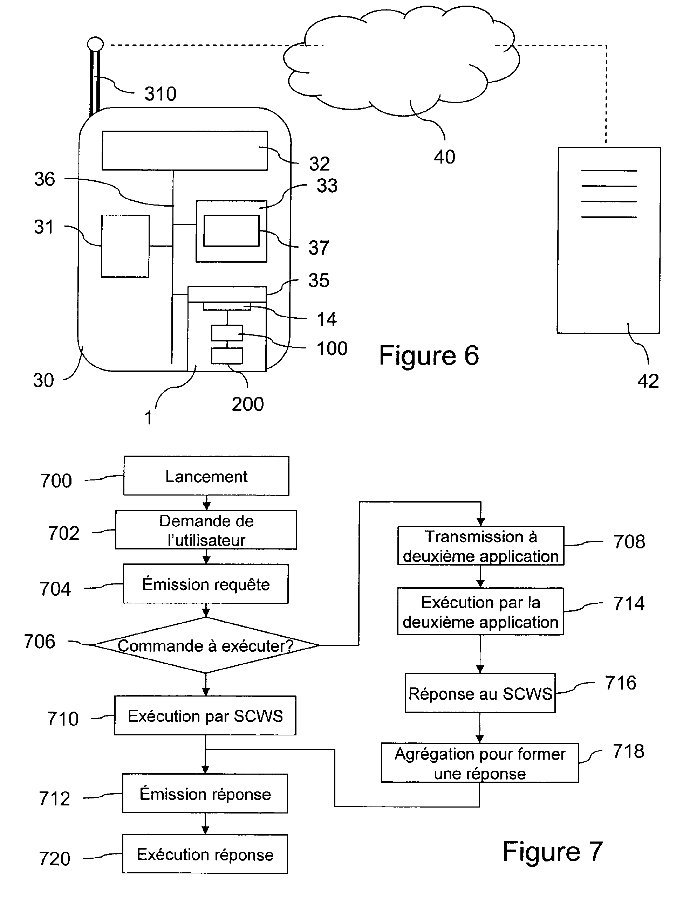

Au cours d'une étape 410, le premier microprocesseur 110 reçoit au moins une commande en provenant du lecteur 30. Cette commande fait partie d'un processus plus général qui est décrit ci-après en référence aux **figures 6** et 7.

Par exemple, cette commande est reçue par la carte 1 sur le contact 14 (c7) et est conforme à la norme ISO7816 (il s'agit d'une commande APDU) ou elle est reçue par le contact 14 (c4 ou c6) et est conforme au protocole SWP. Le premier microprocesseur 110 détermine alors s'il a reçu une commande de la part du lecteur 30 à destination du deuxième microprocesseur 210 pendant une durée prédéterminée, par exemple les cinq dernières secondes.

Pour ce faire, le premier microprocesseur 110 détermine si la commande reçue lui est destinée avant d'en conclure éventuellement qu'il s'agit d'une commande à destination de la deuxième application 220.

A cet effet, plusieurs modes de réalisation peuvent être mis en oeuvre pour que le premier microprocesseur 110 détermine si une commande lui est destinée.

Selon une réalisation, toutes les commandes arrivant sur un même contact 14, par exemple le contact c4 qui est relié à l'interface de communication à très courte portée 320-330 (**figure 2**), sont destinées à la deuxième application 220 (ou en variante à la première application 120).

Dans ce cas, le microprocesseur 110 ou l'application 120 détecte la borne de contact 14 sur laquelle arrive la commande et en détermine directement si cette commande lui est destinée ou non.

On peut notamment prévoir que la première application 120 prépondérante dans la carte 1 incorpore les moyens de communication aptes à recevoir des données des interfaces 14. Ainsi, ces moyens permettent à la première application 120 de savoir sur quel contact est reçue la commande.

En variante, des moyens de communication recevant les données sur les contacts 14 peuvent être distincts de la première application 120. Lors de la transmission de la commande reçue à la première application, une information du numéro de contact de réception de la commande peut être ajoutée afin de permettre à cette application de déterminer ce numéro de contact par simple lecture de l'information.

En variante, la première application peut détecter le protocole ou la norme utilisé(e) pour transmettre les commandes afin de déterminer le canal de communication.

En détail, en reprenant l'exemple ci-dessus, si la première application détecte une commande APDU, elle en déduit que le contact c7 a reçu cette commande et donc qu'il s'agit par exemple du premier canal de communication. En revanche, si une commande conforme au protocole SWP est reçue, la première application en déduit qu'elle a été reçue sur le contact c4 et donc par, par exemple, le deuxième canal.

L'association {contact, protocole ou norme} peut être effectuée et mémorisée lors d'une phase d'initialisation de la carte 1.

Selon une autre réalisation qui met en oeuvre la table 130, le premier microprocesseur 110 extrait la commande reçue.

II parcourt alors le fichier de la table 130 stocké en mémoire pour vérifier si la commande reçue est dans la liste. Par exemple il peut extraire chacune des commandes qui y sont listées, procéder à une comparaison de chacune de ces commandes avec celle reçue.

La comparaison peut être stoppée dès qu'une comparaison est positive, auquel cas le premier microprocesseur 110 conclut que la commande lui est destinée: la détermination est positive. La première application 120 exécute alors la commande reçue.

Si au terme de la comparaison de l'ensemble des commandes listées, aucune comparaison n'est positive, le premier microprocesseur 110 conclut que la commande ne lui est pas destinée, et qu'elle est donc destinée à l'autre application 220: la détermination est négative. La commande est alors transmises à la deuxième application 220, comme vu ci-après, pour éventuellement exécution.

On note ici que si plus de deux applications sont exécutées dans la carte 1, on choisit préférentiellement de hiérarchiser les applications. Par convention, on considère une application principale de niveau supérieure et des applications de rangs inférieurs. La mise en place de cette hiérarchisation permet en cas de détermination négative, que la commande reçue soit transmise à l'application de rang inférieur. Bien sûr, en cas de détermination positive pour une application, celle-ci exécute ladite commande sans la transmettre à une autre application.

Ainsi d'itération en itération, la commande reçue est transmise d'application en application jusqu'à l'application destinataire qui l'exécute sans retransmission à son application de niveau inférieur.

Selon encore une autre réalisation, on n'utilise pas de table 130. Dans ce mode de réalisation, le code exécutable de la première application 120 comprend des instructions conditionnelles. Ainsi chaque instruction prévue à l'intérieur du code est précédée d'une fonction de test portant sur la commande à exécuter, par exemple la fonction *si commande reçue=commande1 alors* exécution de l'instruction commande1 *sinon* ...

On peut prévoir que les tests se succèdent pour chacune des commandes de la première application, explicitement :
*si commande reçue=commande1 alors* exécution
*sinon si commande reçue=commande 2 alors* exécution *sinon ...*
*sinon si commande reçue=commande N alors* exécution
*sinon* détermination négative.

On note que plusieurs tests peuvent être regroupés dans une même boucle *si* en utilisant l'opérateur OU entre des égalités.

En particulier, on peut prévoir de n'effectuer qu'une opération si en groupant à l'aide d'opérateurs OU toutes les égalités *commande reçue=commande i* dans une même boucle si.

Dans cette réalisation, on sort de la dernière boucle si par le chemin *sinon* uniquement dans le cas d'une détermination négative.

Ainsi, soit la commande est exécutée en cas d'égalité vérifiée sans l'une des conditions, soit la commande est transmise à la deuxième application 220 grâce à la branche *sinon* de la dernière boucle si, qui comprend alors une instruction de transmission de la commande à cette application 220.

Selon encore une autre réalisation, on combine l'utilisation de la table 130 avec l'utilisation des instructions conditionnelles. En particulier, on effectue en premier la détermination à partir de la table 130 et ensuite à l'aide des instructions conditionnelles.

Si la table 130 est bien formée, les instructions conditionnelles ne viennent que confirmer que la commande reçue est bien destinée à la première application 220. En revanche, si la table 130 est corrompue, les instructions conditionnelles procurent une protection supplémentaire de la première application 220 contre un dysfonctionnement d'exécution (bogue).

Selon encore une autre réalisation, on peut combiner la détection du contact 14 recevant la commande pour la transmettre vers la deuxième application 220 avec une vérification, par exemple si le contact ne permet pas de prendre de décision immédiate (par exemple contact 14 utilisé pour les deux applications) à l'aide de la table 130 et/ou à l'aide d'instructions conditionnelles mises en oeuvre dans le code exécutable de la première application 120.

Grâce à ces dispositions, on peut utiliser aisément des contacts 14 spécifiques à certaines applications et d'autres contacts 14 dédiés aux deux applications.

Si le premier microprocesseur 110 n'a pas reçu de commande de la part du lecteur 300 à destination du deuxième microprocesseur 210 (donc pas de détermination négative) pendant la durée prédéterminée, le premier microprocesseur 110 interrompt le signal d'horloge à destination du deuxième microprocesseur 210 et ce dernier se met en veille, au cours d'une étape 412. Cette étape 412 peut aisément être mise en oeuvre par le premier microprocesseur 110 en utilisant un "timer" (temporisateur selon la terminologie anglo-saxonne) qui décompte les signaux d'horloge jusqu'à atteindre une valeur prédéterminée et qui lance alors une interruption interrompant la transmission du signal d'horloge au deuxième microprocesseur 210.

On note que l'inhibition du signal d'horloge transmis par le premier microprocesseur 110 au deuxième microprocesseur 210 permet, dans le cas où le deuxième microprocesseur 210 comporte des moyens de mise en veille en l'absence de signal d'horloge, d'économiser le courant fournit par le lecteur, ce qui peut être particulièrement critique lorsque le lecteur est dans un objet portable alimenté par une batterie, tel qu'un téléphone mobile. Dans des variantes, le premier microprocesseur 110 peut commander la mise en veille d'une partie du deuxième microprocesseur 210. Le premier microprocesseur 110 fonctionne alors de manière connue de l'homme du métier, par exemple comme carte SIM dans le cadre d'une application de téléphonie mobile, au cours d'une étape 414 et retourne régulièrement à l'étape 410. Au cours de l'étape 414, le premier microprocesseur exécute chaque commande qui lui est destinée et renvoie au moins une réponse au lecteur 30.

Si, au cours d'une étape 410, le premier microprocesseur détermine qu'il a reçu au moins une commande de la part du lecteur 30 à destination du deuxième microprocesseur 210 (donc détermination négative), le premier microprocesseur 110 envoie le signal d'horloge à destination du deuxième microprocesseur 210 et ce dernier se remet en fonctionnement, au cours d'une étape 416. On note qu'éventuellement, pour certains types de microprocesseurs et de mises en veille, au cours de l'étape 416, le premier microprocesseur 110 commande une mise à zéro du deuxième microprocesseur 210.

Au cours d'une étape 417, le premier microprocesseur 110 transmet, au deuxième microprocesseur 210, chaque commande destinée au deuxième microprocesseur 210.

En variante, le premier microprocesseur 110 engendre des commandes pour le deuxième microprocesseur 210, en fonction de plusieurs commandes reçues de la part du lecteur 30. En variante, le premier microprocesseur 110 engendre des commandes pour le deuxième microprocesseur 210 en fonction d'au moins une commande reçue de la part du lecteur 30 et d'informations stockées dans la mémoire associée 120.

Le deuxième microprocesseur 210 traite alors cette commande, par exemple de type APDU conforme à la norme ISO 7816, et retourne une réponse au premier microprocesseur 110, à destination du lecteur 300, au cours d'une étape 418.

A titre d'exemple et comme illustré plus en détail ci-après en référence aux figures 6 et 7, le traitement peut prendre part à un processus d'authentification par "challenge response" (challenge / réponse) pour lequel le deuxième microprocesseur 210 calcule une donnée chiffrée, à partir d'une donnée aléatoire reçue avec la commande et à partir d'une clé symétrique stockée en mémoire. On prévoit alors des moyens cryptographiques *ad hoc,* par exemple logiciel, au niveau du deuxième microcircuit 200 et une clé mémorisée dans une mémoire du microcircuit 200.

Puis, au cours d'une étape 420, le premier microprocesseur 110 envoie la réponse reçue de la part du deuxième microprocesseur 210 au lecteur 30 et retourne à l'étape 410. Cette réponse est notamment relayée par le premier microprocesseur 110 vers les contacts de communication 14. Cette étape est notamment plus détaillée ci-après en référence aux **figures 6** et 7.

La présente invention permet ainsi notamment de faire co-exister les deux types d'applications sur la même carte et de mettre à jour aisément les applications à exigence modérée en sécurité, sans avoir à refaire certifier les applications à haute exigence de sécurité et sans modifier celles-ci.

On observe, en **figure 5****,** une réalisation de l'invention s'appuyant sur un unique microcircuit 100.

Le microcircuit 100 (supporté par un corps de carte non représenté) présente un seul microprocesseur 110 multi-tâches pour l'exécution des deux applications 120 et 220.

Les principes évoqués précédemment s'appliquent à ce mode de réalisation, notamment l'utilisation de la table 130, des instructions conditionnelles, d'un contact 14 dédié à la deuxième application.

Les communications et contrôles entre les deux applications 120 et 220 sont alors uniquement réalisés par voie applicative.

En référence maintenant aux **figures 6** et 7, on décrit une application bancaire mettant en oeuvre l'invention.

On retrouve le téléphone mobile 30 lecteur de la carte à microprocesseur 1.

Le téléphone mobile 30 est doté de composants de fonctionnement, notamment une unité centrale de traitement CPU 31, un écran d'affichage 32, une ou plusieurs mémoires 33, par exemple une mémoire morte et une mémoire vive, des moyens de communication 34 avec le réseau de téléphonie mobile 40 et une interface 35 avec une carte SIM 1 au niveau des contacts électriques 14.

Ces composants sont interconnectés au moyen d'un bus de données 36.

L'unité centrale 31 est apte à exécuter des applications contenues en mémoire 33, notamment un système d'exploitation embarqué (non représenté) permettant le fonctionnement classique d'un téléphone mobile.

La mémoire 33 comprend également une application de type navigateur Web 37 connu, exécutable par l'unité centrale de traitement 31, pour permettre à l'utilisateur d'accéder au réseau Internet distant, par exemple via le protocole WAP précédemment évoqué. Un clavier ou dispositif de saisie (non représenté) pourvu sur le téléphone mobile 30 permet à l'utilisateur d'interagir avec le navigateur web 37 lorsque celui-ci est exécuté par l'unité centrale 31. Le rendu fourni par le navigateur web 37 est affiché sur l'écran 32 du téléphone 30.

La carte 1 et les composants du téléphone 30, notamment le navigateur, communique par la norme OMA (Open Mobile Alliance) OMA-TS-Smartcard_Web_Server-V1.

La première application 120 est un serveur de carte à puce, par exemple un serveur web ("*Smart Card Web Serveur*") et le microcircuit 100 stocke en mémoire des pages web.

La deuxième application 220 est une application de porte-monnaie électronique.

En référence à la **figure 7**, on décrit maintenant un utilisateur souhaitant consulter son solde de porte-monnaie électronique et le recharger, le cas échéant.

A l'étape 700, l'utilisateur lance le navigateur web 37 qui initie alors un contexte d'exécution propre et affiche une page web d'accueil de gestion du porte monnaie.

A l'étape 702, l'utilisateur sélectionne une action de la page affichée, par exemple il clique sur un lien "consulter son solde".

A l'étape 704, le navigateur 37 envoie une requête HTTP au serveur SCWS 120 selon la demande de l'utilisateur. Cette requête HTTP peut comprendre notamment une fonction "consultation_solde" qui est mise en oeuvre par l'application 220 du porte-monnaie.

A l'étape 706, le serveur SCWS 120 reçoit la requête et détermine si la commande reçue "consultation_solde" lui est destinée, selon l'un des mécanismes évoqués précédemment en lien avec la **figure 4****.**

A l'étape 708, le serveur 120 a déterminé que la commande doit être transmise, et la transmet donc à l'application 220. Notamment, le serveur 120 convertit la commande "consultation_solde" en une commande APDU à destination de la deuxième application 220. On peut, par exemple, envisager l'utilisation d'une table de conversion pour convertir au moins une partie des commandes reçues par requête HTTP (et de façon générale, selon tout protocole, par exemple SWP) en une commande APDU à destination de la deuxième application 220.

On note que si la commande reçue était destinée au serveur 120, alors ce dernier l'aurait exécutée (étape 710) et aurait envoyé le résultat, soit une réponse HTTP, par exemple une nouvelle page HTML, au navigateur (étape 712).

Suite à la transmission, à l'étape 714, l'application porte_monnaie 220 exécute la commande. En l'espèce, l'application détermine la valeur du solde monétaire restant sur le compte en fonction de données historiques de transaction (crédits et débits) enregistrées en mémoire du microcircuit 200.

A l'étape 716, la deuxième application 220 retourne le solde calculé au serveur web 120.

A l'étape 718, le serveur web 120 intègre le solde obtenu dans une page HTML dont un modèle est en mémoire du premier microcircuit. Ce modèle peut par exemple contenir des données supplémentaires liées à l'opérateur de téléphonie de la carte SIM 1, notamment un logo ou des informations de l'utilisateur tel que son numéro de téléphone. Le serveur web 120 forme ainsi une réponse HTTP qu'il transmet au navigateur 37 à l'étape 712.

A l'étape 720, le navigateur 37 exécute la réponse HTTP, en l'espèce il affiche la page HTML contenant le solde et le logo sur l'écran 32 du téléphone.

Ultérieurement, l'utilisateur veut recharger en ligne son porte-monnaie 220, en utilisant le serveur bancaire distant 42.

Sur la page d'accueil de gestion du porte monnaie, il clique sur un lien "recharger son porte-monnaie".

Une requête HTTP de rechargement est envoyée au serveur SCWS 120 comme à l'étape 704. Cette requête comprend l'appel d'une fonction *initAuthent* mise en oeuvre par le serveur SCWS 120, par exemple:
<a href="http://microcircuit2/initAuthent>recharger son porte-monnaie </a>

Via les étapes 706, 710, 712 et 720, une page ayant pour fonction de vérifier un code secret est générée et affichée sur l'écran 32 :

```
          <FORM action="verifyCode" method="post" name=BankingCode
          Enter your personal code
          <INPUT type="password" name="Code" maxLength="4">
```

L'utilisateur saisit alors son code personnel dans le formulaire affiché par le navigateur 37 et valide le formulaire, ce qui transmet une requête HTTP vers le serveur SCWS 120 (l'étape 704).

Le serveur 120 détermine à l'étape 706 qu'il s'agit d'une fonction "verifyCode" qui est mise en oeuvre par l'application porte-monnaie 220.

Après transmission (étape 708), le code est vérifié (étape 714) par l'application porte-monnaie. Si le code est bon, la carte SIM 1 initie une liaison (pour la transaction) avec le serveur bancaire 42 en générant une réponse HTTP à la requête (étapes 718 et 712) sur la base d'un identifiant fourni par l'application porte-monnaie et du code saisi et crypté par une clé cryptographique (étape 716). La réponse contient la page HTML suivante. Le navigateur 37 exécute et affiche (étape 720) cette page à l'utilisateur sur l'écran 32 :

```
 <HTML>
     <HEAD>
          <TITLE>PIN correct</TITLE>
          <META http-equiv="Refresh" content=
          "1; URL=https://www.mybank.com/HomeBanking.cgi?code=123">
     </H EAD>
     <BODY>
          Veuillez patienter, vérification en cours...
     </BODY>
 </HTML>
```

On remarque ici que la méta-donnée identifiée par la balise <META> comprend une redirection automatique, ici au bout de *content=*1 seconde, vers l'adresse du serveur bancaire 42, ici *https:llwww.mybank.com*/*HomeBanking.cgi?id=123;code=85F6EE9,* selon un canal sécurisé. L'identifiant 123 et le code saisi et crypté *85F6EE9* sont transmis en paramètres. Ainsi, au terme de ce délai de 1 seconde, le navigateur émet une requête HTTP à l'adresse spécifiée précédemment, ici le serveur bancaire 42 et sa page principale.

Différentes étapes d'un processus d'authentification sont ainsi menées entre l'application porte-monnaie 220 et le serveur bancaire 42, en s'appuyant sur un mécanisme de redirection au niveau du navigateur 37.

Une fois l'authentification effectuée, des mécanismes identiques et/ou classiques sont utilisés pour permettre à l'utilisateur de recharger effectivement son solde de porte-monnaie.

Les exemples qui précèdent ne sont que des modes de réalisation de l'invention qui ne s'y limite pas.

## Revendications

1. Carte à microprocesseur (1) comportant :
- un premier et un deuxième microcircuits (100, 200) mémorisant respectivement une première et une deuxième applications (120, 220);
- des moyens de communication (14) avec l'extérieur de la carte (1), reliés audit premier microcircuit (100);
- ladite première application (120) étant apte à transmettre (708), à ladite deuxième application (220), une commande reçue par les moyens de communication (14);
- ladite première application (120) étant apte à recevoir une réponse à ladite commande transmise à la deuxième application (220) et à agréger (718) ladite réponse avec au moins une donnée stockée en mémoire du premier microcircuit (200) de sorte à former une réponse globale à ladite commande reçue de l'extérieur.

2. Carte à microprocesseur (1) selon la revendication précédente, dans laquelle la réponse de la deuxième application et l'au moins une donnée agrégées sont des données d'affichage pour un équipement externe (30) à la carte.

3. Carte à microprocesseur (1) selon l'une des revendications précédentes, dans laquelle ladite réponse de la deuxième application à la commande transmise comprend une donnée d'authentification.

4. Carte à microprocesseur (1) selon l'une des revendications 1 à 3, dans laquelle la première application (120) est agencée pour transmettre, à l'extérieur de la carte, la réponse globale sous forme de réponse HTTP,
la réponse et l'au moins une donnée étant incluses dans le corps d'une page de la réponse HTTP de sorte qu'un navigateur externe (37) exécutant la réponse globale affiche la réponse et l'au moins une donnée sur un écran de visualisation (32).

5. Carte à microprocesseur (1) selon l'une des revendications 1 à 3, dans laquelle la première application (120) est agencée pour transmettre, à l'extérieur de la carte, la réponse globale sous forme de réponse HTTP,
la réponse globale comprenant une instruction de redirection et une adresse cible d'un équipement distant (40) de sorte à commander un navigateur intermédiaire (37) à retransmettre au moins une partie de ladite réponse de la deuxième application (220) audit équipement distant (40).

6. Carte à microprocesseur (1) selon l'une des revendications 1 à 3, dans laquelle la première application (120) est agencée pour transmettre, à l'extérieur de la carte (1), la réponse globale sous forme de commande conforme à la boîte à outils d'applications SIM ("*SIM Application Toolkit*" selon la terminologie anglo-saxonne).

7. Carte à microprocesseur (1) selon l'une des revendications précédentes, dans laquelle ladite première application (120) est un serveur web de carte à puce et ladite au moins une donnée comprend des données HTTP.

8. Carte à microprocesseur (1) selon l'une quelconque des revendications précédentes, dans lequel la première application (120) comporte des moyens de conversion de ladite commande reçue en un format de commande compatible avec ladite deuxième application (220).

9. Carte à microprocesseur (1) selon l'une des revendications précédentes, dans laquelle les moyens de communication sont agencés pour se connecter à une interface de communication sans fil (320) conformes à la norme NFC (acronyme de "Near Field Communication") d'un lecteur de cartes (30), lesdits moyens de communication mettant en oeuvre un protocole de communication SWP (acronyme de "Single Wire Protocol") avec ladite interface de communication sans fil (320).

10. Carte à microprocesseur (1) selon la revendication précédente, dans laquelle une liaison d'horloge relie les deux microcircuits de sorte que ledit premier microcircuit fournisse un signal d'horloge au deuxième microcircuit.

11. Carte à microprocesseur (1) selon l'une des revendications précédentes, dans laquelle le premier microcircuit met en oeuvre un niveau de sécurité moindre que le deuxième microcircuit.

12. Carte à microprocesseur (1) selon l'une des revendications précédentes, **caractérisée en ce qu'**elle est de type carte SIM ou USIM.

13. Dispositif (30) comprenant une carte à microprocesseur (1) selon l'une quelconque des revendications précédentes.

14. Dispositif (30) comprenant une carte à microprocesseur (1) selon l'une quelconque des revendications précédentes et une application de téléphone (37) agencée pour communiquer avec ladite carte à microprocesseur de sorte à transmettre (704) ladite commande et recevoir (712) ladite réponse globale.

15. Procédé de traitement d'une commande par une carte à microprocesseur (1) comportant un premier et un deuxième microcircuits (100, 200) mémorisant respectivement une première et une deuxième applications (120, 220), le procédé comprenant les étapes suivantes :
- recevoir, par le premier microcircuit (100), une commande de l'extérieur de la carte (1),
- transmettre (708) ladite commande reçue au deuxième microcircuit (200), et
- agréger (718) une réponse du deuxième circuit (200) à ladite commande avec au moins une donnée stockée en mémoire du premier microcircuit (100) de sorte à former une réponse globale à ladite commande reçue de l'extérieur.
